# DEMANDE DE BREVET EUROPEEN

(11) **EP 3 957 506 A1**
(43) Date de publication de la demande: **23.02.2022**
(21) Numéro de dépôt: 20191866.1
(22) Date de dépôt: 20.08.2020
(51) Int. Cl.: B60K 6/48, B60K 6/547, B60K 6/36, B60K 6/405, F16H 7/06

(54) **DISPOSITIF DE TRACTION HYBRIDE DE VEHICULE AUTOMOBILE A TRANSMISSION PAR CHAINE**

(71) Demandeur: RENAULT s.a.s., 92100 Boulogne-Billancourt (FR)
(72) Inventeur: RAOUL, Michel, 78990 Elancourt (FR)

(57) **Abrégé**

Dispositif de traction hybride (1) pour véhicule automobile, composé d'une boîte de vitesses à arbres parallèles, qui comporte un arbre primaire (12), transmettant la puissance d'un moteur thermique d'entraînement à un arbre secondaire (13) relié aux roues du véhicule, et d'une machine électrique (20) qui transmet sa puissance au même arbre secondaire (13) de la boîte que le moteur thermique par l'intermédiaire d'un arbre de couplage (40), la machine électrique (20) entraînant un arbre intermédiaire (30) portant deux pignons fixes (31, 32), engrenant avec deux pignons (41, 42) de l'arbre de couplage (40) dédiés à la machine électrique (20), et le chemin de transmission de puissance entre la machine électrique (20) et l'arbre secondaire (13) passant par une chaîne (62) reliant l'arbre de couplage (40) à l'arbre secondaire (13).

## Description

L'invention concerne un dispositif de traction hybride pour véhicule automobile comportant un moteur thermique avec sa boîte de vitesses manuelle ou robotisée, et une machine électrique connectée à la boîte de vitesses.

Plus précisément, elle a pour objet un dispositif de traction hybride pour véhicule automobile, composé d'une boîte de vitesses à arbres parallèles, qui comporte un arbre primaire, transmettant la puissance d'un moteur thermique d'entraînement à un arbre secondaire relié aux roues du véhicule, et d'une machine électrique qui transmet sa puissance au même arbre secondaire de la boîte que le moteur thermique, par l'intermédiaire d'un arbre de couplage.

Dans les véhicules hybrides comportant une double motorisation, thermique et électrique, la machine électrique est parfois liée au moteur thermique sur sa face dite « accessoires », comme l'alternateur. Pour augmenter la puissance électrique installée, et l'efficacité des échanges d'énergie, il est plus avantageux de connecter la machine électrique à la boîte de vitesses. Cette disposition permet d'ouvrir ces véhicules à des possibilités nouvelles, en particulier le roulage en mode électrique, et à consommation réduite.

On connait des groupes motopropulseurs hybrides, dont la machine électrique est connectée à l'un ou à l'autre des arbres de la boîte de vitesses.

Lorsqu'elle est liée avec l'arbre primaire, la machine électrique bénéficie des rapports de réduction de la boîte, mais perturbe l'inertie et la traînée équivalente de celui-ci. Pour que cette perturbation soit supportée par les dispositifs de synchronisation, il est nécessaire d'automatiser les changements de rapport. Un superviseur pilote alors la machine électrique pendant les changements, et limite, ou supprime, les effets indésirables d'inertie et de traînée. Dans certains cas, la machine électrique peut réaliser à elle seule la synchronisation, et les synchroniseurs classiques sont supprimés. Toutefois, cette architecture présente l'inconvénient important suivant : puisque la machine électrique est découplée des roues pendant le changement de rapport, elle ne peut pas assurer la continuité d'accélération complète, ou partielle, qui permettrait d'améliorer la prestation de passage des vitesses d'une boîte de vitesses robotisée.

Lorsque la machine est liée à l'arbre secondaire, elle est capable de restituer (ou d'échanger) de l'énergie en permanence, y-compris pendant les changements de rapports. Elle ne bénéficie plus des rapports de la boîte, et a besoin d'une liaison dédiée avec l'arbre secondaire, par exemple une chaîne ou des couples de pignons.

Lorsqu'elle est liée en permanence aux roues, la machine électrique peut devenir dans certaines circonstances, la seule source de traction du véhicule. Pour augmenter l'apport en couple à la roue par cette machine à basse vitesse, ou pour faire décoller le véhicule à partir de l'arrêt en mode électrique, il faut une forte démultiplication. Pour continuer à utiliser la même machine à vitesse plus élevée, il faut une démultiplication plus faible. Enfin, pendant certaines phases de roulage, comme par exemple en vitesse stabilisée sur autoroute, il n'y a pas, ou très peu, d'échanges d'énergie entre la roue du véhicule et le système de motorisation électrique. Il peut alors être préférable de déconnecter la machine électrique, afin de limiter les pertes liées à son entraînement. Pour satisfaire à toutes ces exigences, le mécanisme de connexion de la machine électrique avec la roue, peut avantageusement disposer de deux rapports, et d'une position neutre.

La publication DE 10 2016 120 010, décrit un groupe motopropulseur comportant un moteur thermique, une boîte de vitesses, et une machine électrique. L'arbre du rotor de la machine électrique porte un premier pignon qui met en mouvement un premier arbre comportant deux pignons fixes, à l'aide d'un pignon intermédiaire. Un deuxième arbre porte deux pignons fous, un groupe de crabotage, et possède à son extrémité un pignon fixe qui engrène avec la couronne du différentiel. A l'intérieur de la boîte de vitesses, qui est dédiée au moteur thermique, une seconde boîte à deux rapports dédiés à la machine électrique est ajoutée. La deuxième boîte de vitesses peut aussi être disposée à l'extérieur de la première.

Cet ensemble de transmission de puissance, forme une excroissance vers le bas, sous la boîte de vitesses, qui est difficilement compatible avec la garde au sol du véhicule.

Pour pallier cet inconvénient, l'invention propose un autre chemin de transmission de puissance entre la machine électrique et l'arbre secondaire.

Conformément à l'invention, le chemin de transmission de puissance entre la machine électrique et l'arbre secondaire, passe par une chaîne reliant l'arbre de couplage à l'arbre secondaire.

Cette chaîne est entraînée par un pignon menant, en traction électrique, porté par l'arbre de couplage des pignons fous des rapports de la machine électrique.

La chaîne entraîne un second pignon mené, en traction électrique, porté par un des arbres secondaires de la boîte.

Le pignon mené est agencé à l'extrémité de l'arbre secondaire du bas de bas de la boîte de vitesses. Les pignons et la chaîne sont isolés dans un compartiment à l'extrémité de la boîte, fermé par un couvercle.

La présente invention sera mieux comprise à la lecture de la description suivante d'un mode de réalisation non limitatif de celle-ci, en se reportant aux dessins annexés.
[Fig.1] est une vue en coupe longitudinale du dispositif complet, en position rapport neutre.
[Fig. 2] est une vue en coupe transversale du dispositif complet.
[Fig. 3] est une vue en coupe longitudinale du dispositif complet seul, en position de rapport court, montrant le chemin de transmission de puissance.
[Fig. 4] est une vue en coupe longitudinale du dispositif complet seul, en position de rapport long, montrant le chemin de transmission de puissance.

**[Table 1]**

| Repères | Nomenclature |
|---|---|
| 1 | Mécanisme de transmission de puissance |
| 10 | Carter d'embrayage |
| 11 | Carter de mécanisme |
| 12 | Arbre primaire |
| 13 | Arbre secondaire bas des rapports avant |
| 14 | Arbre secondaire haut de marche arrière |
| 15 | Différentiel |
| 16 | Mécanismes de sélection des vitesses |
| 17 | Fourchettes de commande des baladeurs |
| 20 | Machine électrique |
| 21 | Arbre rotor de machine électrique |
| 22 | Connecteur |
| 25 | Pignon fixe sur arbre rotor |
| 30 | Arbre intermédiaire |
| 31 | Pignon fixe du rapport court |
| 32 | Pignon fixe du rapport long |
| 35 | Pignon fixe de descente |
| 40 | Arbre de couplage entrée |
| 41 | Pignon fou rapport court |
| 42 | Pignon fou rapport long |
| 43 | Groupe de crabotage |
| 44 | Fourchette de commande du groupe de crabotage 43 |
| 45 | Moteur d'actionnement fourchette 44 |
| 50 | Arbre de couplage de sortie |
| 51 | Coupleur, limiteur de couple |
| 60 | Pignon menant de chaîne |
| 61 | Pignon mené de chaîne |
| 62 | Chaine |
| 63 | Couvercle compartiment chaîne |
| 70 | Pompe à huile |

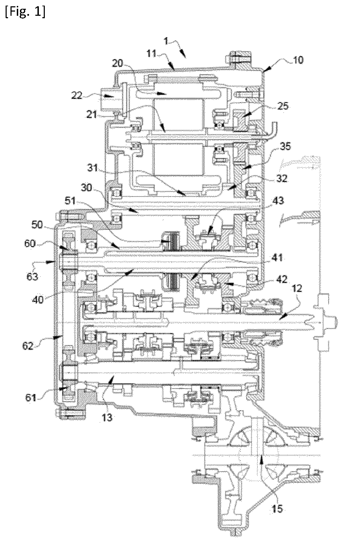

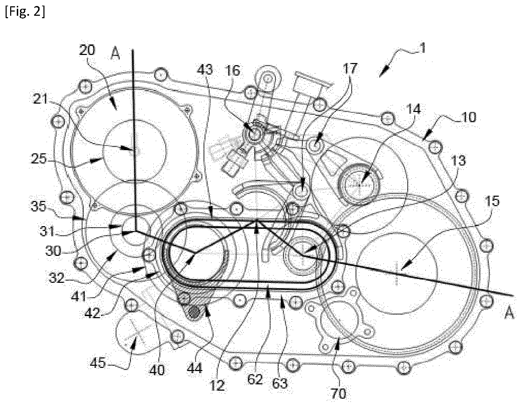

Sur la figure 1, on a représenté en coupe longitudinale, un mode de réalisation du dispositif de traction hybride pour véhicule automobile 1, faisant l'objet de l'invention. Ce dispositif est composé d'une boîte de vitesses qui comporte un arbre primaire 12, transmettant la puissance d'un moteur thermique d'entraînement à un arbre secondaire 13 relié aux roues du véhicule, et d'une machine électrique 20 qui transmet sa puissance au même arbre secondaire 13 de la boîte que le moteur thermique, par l'intermédiaire d'un arbre de couplage 40. Le dispositif proposé, constitue un dispositif d'hybridation électrique, ou hybride, complet. Ce dispositif est une extension d'une boîte de vitesses mécanique classique à arbres parallèles. Dans l'exemple de réalisation non limitatif illustré par les figures, c'est une boîte de vitesses manuelle. Elle peut aussi être équipée d'un embrayage automatisé, ou même être entièrement robotisée. Sans sortir du cadre de l'invention, le dispositif proposé peut être réalisé avec une transmission automatique, notamment à double embrayage. La boîte de vitesses à laquelle on vient rapporter un module d'électrification est composée de deux carters, le carter d'embrayage 10 et le carter de mécanisme 11. A l'intérieur des carters 10, 11, on trouve : l'arbre primaire 12, un premier arbre secondaire 13 agencé en partie basse pour les rapports de marche avant, un second arbre secondaire 14 (voir figure 2) agencé en partie haute pour le rapport de marche arrière, un différentiel complet 15, un dispositif de changement de rapports composé d'un ensemble de sélection et de passage 16 et des fourchettes 17 de commande des baladeurs.

L'hybridation, ou l'électrification de la boîte, consiste à intégrer à l'intérieur de celle-ci une machine électrique 20, dont le rotor est monté sur son arbre 21. Cette machine est alimentée en courant, et commandée, par un onduleur (non représenté), liée à celle-ci par le connecteur 22 qui traverse la paroi du carter de mécanisme 11.

L'arbre du rotor 21 supporte une première denture 25 qui coopère avec le pignon 35 et permet de transmettre la puissance de la machine à un arbre intermédiaire 30. Cet arbre possède deux pignons fixes 31 et 32, qui constituent les deux pignons menants d'une transmission à deux rapports, pour la puissance fournie par la machine électrique 20, lorsqu'elle est motrice.

L'arbre de couplage 40 porte un pignon 41 de rapport court et un pignon 42 de rapport long, dédiés à la machine électrique 20, ainsi qu'un groupe de crabotage et/ou de synchronisation 43. Les deux pignons 41, 42 de l'arbre de couplage dédiés à la machine électrique, 20 sont des pignons fous. Les deux pignons fous 41, 42 de l'arbre de couplage 40 engrènent avec des pignons fixes 31, 32 de l'arbre intermédiaire 30, entraîné par la machine électrique 20.

L'arbre 40 supporte un arbre creux 50, dans sa partie extrême à gauche sur la figure 1. Les deux arbres 40, 50 sont liés en rotation par un dispositif 51 constitué d'une cloche, de plusieurs disques maintenus pressées par une rondelle Belleville, qui joue les rôles de coupleur et de limiteur de couple, protégeant la machine électrique des pics de couple remontant des roues, par exemple lors du blocage de celles-ci pendant un freinage sur revêtement peu adhérent. L'arbre 50 traverse la cloison du carter 11, et porte un pignon 60 à son extrémité. Ce pignon fait partie du système d'entrainement objet de l'invention, comprenant un second pignon 61, porté par l'arbre secondaire 13 qui lui aussi traverse la cloison du carter 11. Ces deux pignons sont reliés par une chaîne 62. Le chemin de transmission de puissance entre la machine électrique 20, et l'arbre secondaire 13, passe par cette chaîne 62, qui relie l'arbre de couplage 40 à l'arbre secondaire 13. La chaîne 62 est entraînée par le pignon menant 60, porté par l'arbre de couplage 40. Elle entraîne le pignon mené 61, porté par l'arbre secondaire 13. Le pignon mené 61 est agencé à l'extrémité de l'arbre secondaire 13, disposé en bas de la boîte de vitesses. Les deux pignon 60, 61 et la chaîne 62 sont dans un compartiment isolé de la boîte de vitesses, fermé par le couvercle 63.

Les pignons 41, 42 transmettent la puissance de la machine électrique à l'arbre secondaire 13. Ils sont fous, et sont entraînés par les pignons fixes 31, 32, de l'arbre intermédiaire 30, recevant la puissance de la machine électrique sur deux rapports de démultiplication. Le premier pignon fixe 31 coopère avec le pignon fou 41 pour réaliser le rapport court. Le deuxième pignon fixe 32 coopère avec le pignon 42 pour réaliser le rapport long. L'arbre de couplage 40 transmet le mouvement, par l'intermédiaire d'un coupleur multidisque limiteur de couple 51, à l'arbre creux 50 concentrique qui porte à son extrémité le pignon 60 d'entrainement de la chaîne 62 entraînant le pignon 61 porté par l'arbre secondaire 13.

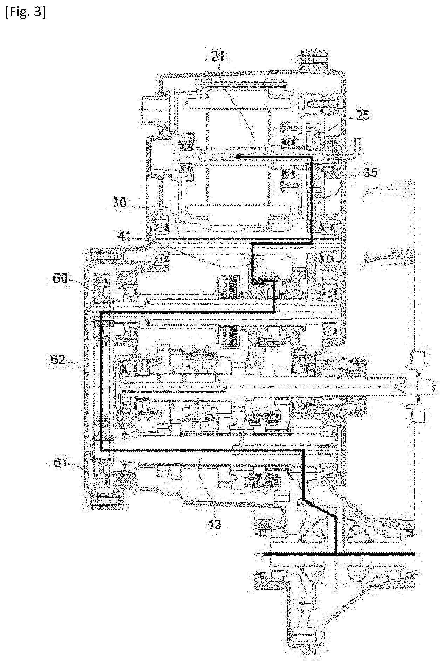

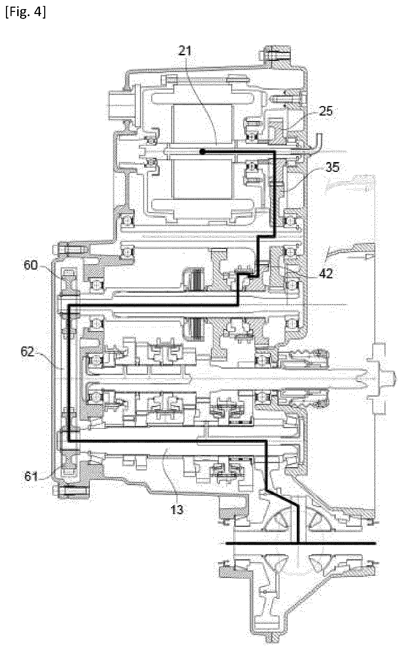

Un groupe de couplage 43 à trois positions, est agencé entre les deux pignons fous 41, 42 : la position centrale correspond à la déconnexion de la machine électrique. C'est la représentation de la figure 1. A gauche, le baladeur crabote le pignon 41 à l'arbre 40, et connecte la machine électrique 20 selon le rapport court. C'est la représentation de la figure 3 où l'on montre la transmission de puissance de la machine au différentiel 15. A droite, le baladeur crabote le pignon 42 à l'arbre 40 et connecte la machine électrique 20 sur le rapport long. C'est la configuration de la figure 4. Les figures 3 et 4 montrent le chemin de puissance, de la machine électrique 20 au différentiel. Sur les deux figures, le chemin de transmission de puissance entre la machine 20 électrique et l'arbre secondaire 13 de la boîte, passe par les pignons 60, 61 et la chaine 62.

Le baladeur 43 disposé entre les deux pignons fous 41, 42, de l'arbre de couplage 40 est commandé par un actionneur composé d'une fourchette 44 d'un moteur 45 et d'un mécanisme intermédiaire non représenté. La lubrification, la gestion de la température de l'huile et la propreté de l'huile, sont assurées par la pompe à huile 70.

## Revendications

1. Dispositif de traction hybride (1) pour véhicule automobile, composé d'une boîte de vitesses à arbres parallèles, qui comporte un arbre primaire (12), transmettant la puissance d'un moteur thermique d'entraînement à un arbre secondaire (13) relié aux roues du véhicule, et d'une machine électrique (20) qui transmet sa puissance au même arbre secondaire (13) de la boîte que le moteur thermique par l'intermédiaire d'un arbre de couplage (40), **caractérisé en ce que** la machine électrique (20) entraîne un arbre intermédiaire (30) portant deux pignons fixes (31, 32), engrenant avec deux pignons (41, 42) de l'arbre de couplage (40) dédiés à la machine électrique (20), et **en ce que** le chemin de transmission de puissance entre la machine électrique (20) et l'arbre secondaire (13) passe par une chaîne (62) reliant l'arbre de couplage (40) à l'arbre secondaire (13).

2. Dispositif de traction hybride selon la revendication 1, **caractérisé en ce que** l'arbre de couplage (40) porte un pignon (41) de rapport court et un pignon (42) de rapport long, dédiés à la machine électrique (20).

3. Dispositif de traction hybride selon la revendication 2, **caractérisé en ce que** les deux pignons (41, 42) de l'arbre de couplage dédiés à la machine électrique (20) sont des pignons fous.

4. Dispositif de traction hybride selon la revendication 1, 2 ou 3, **caractérisé en ce que** la chaîne (62) est entraînée par un pignon menant (60) porté par l'arbre de couplage (40).

5. Dispositif de traction hybride selon l'une des revendications précédentes, **caractérisé en ce que** la chaîne (62) entraîne un pignon mené (61), porté par l'arbre secondaire (13).

6. Dispositif de traction hybride selon la revendication 5, **caractérisé en ce que** le pignon mené (61) est agencé à l'extrémité de l'arbre secondaire (13).

7. Dispositif de traction hybride selon la revendication 6, **caractérisé en ce que** l'arbre secondaire (13) est disposé en bas de la boîte de vitesses.

8. Dispositif de traction hybride selon la revendication 6 ou 7, caractérisé en ce la chaîne (62) et les pignons menant et mené (60, 61) sont isolés dans un compartiment de la boîte fermé par un couvercle (63).
